# EUROPEAN PATENT APPLICATION

(11) **EP 4 450 475 A1**
(43) Date of publication of application: **23.10.2024**
(21) Application number: 22907227.7
(22) Date of filing: 01.12.2022
(51) Int. Cl.: C04B 35/117, B22F 1/00, C01F 7/02, C04B 7/345, C04B 28/00, C04B 32/02, C04B 35/76, C04B 35/84, C04B 37/02, C22C 1/05

(54) **COMPOSITE MEMBER**

(30) Priority: 17.12.2021 JP 2021205323
(71) Applicant: Panasonic Intellectual Property Management Co., Ltd., Osaka-shi, Osaka 540-6207 (JP)
(72) Inventor: KURIZOE, Naoki, Kadoma-shi, Osaka 571-0057 (JP); YOSHIOKA, Tatsuro, Kadoma-shi, Osaka 571-0057 (JP); SATO, Natsuki, Kadoma-shi, Osaka 571-0057 (JP); SAWA, Ryosuke, Kadoma-shi, Osaka 571-0057 (JP)
(74) Representative: Müller-Boré & Partner Patentanwälte PartG mbB
(86) International application number: PCT/JP2022/044387
(87) International publication number: WO 2023/112699

(57) **Abstract**

Provided is a composite member 100 including an inorganic matrix part 10 that is made from an inorganic substance including a metal oxide hydroxide, and a metal fiber 20 that is present in a dispersed state inside the inorganic matrix part 10 and has an aspect ratio of 100 or more. In the composite member 100, a porosity in a cross section of the inorganic matrix part 10 is 20% or less.

## Description

### TECHNICAL FIELD

The present invention relates to a composite member.

### BACKGROUND ART

Ceramic is known to have high strength and high heat resistance but to be not easily deformed. When a load is applied to ceramic, the ability to relax the load is thus small, and a sudden fracture may occur. To improve such properties, research has been actively conducted to improve the strength of ceramics by blending fibers.

Patent Literature 1 discloses a cement admixture including a masterbatch (A) containing a cellulose nanofiber obtained by refining cellulose in a polyester-based resin, a maleic anhydride copolymer resin (B), and water (C). It is described that by adding the cement admixture to a cement composition, the cellulose nanofiber can be uniformly dispersed in the cement composition, thereby improving the strength of cement compacts such as concrete and mortar.

### CITATION LIST

### PATENT LITERATURE

Patent Literature 1: Japanese Unexamined Patent Application Publication No. 2015-155357

### SUMMARY OF INVENTION

However, since cement compacts are mainly made from hydrates and have many pores, there is an issue that the mechanical strength of the compacts obtained is insufficient even when fibers are blended.

The present invention has been made in consideration of the above issue, which is inherent in the related art. An object of the present invention is to provide a composite member having an excellent mechanical strength.

In response to the above issue, a composite member according to an aspect of the present invention includes an inorganic matrix part that is made from an inorganic substance including a metal oxide hydroxide, and a metal fiber that is present in a dispersed state inside the inorganic matrix part and has an aspect ratio of 100 or more. The porosity in a cross section of the inorganic matrix part is 20% or less.

### BRIEF DESCRIPTION OF DRAWINGS

[Fig. 1] Fig. 1 is a schematic cross-sectional view of an example of a composite member according to the present embodiment.
[Fig. 2] Fig. 2(a) is a schematic view of an enlarged cross section of the composite member in Fig. 1. Fig. 2(b) is a schematic cross-sectional view of the vicinity of grain boundaries of a particle group of an inorganic substance.
[Fig. 3] Fig. 3 includes scanning electron microscope (SEM) photographs illustrating results of observing a cross section of a test sample of example 1-2 at magnifications of 1,000 times and 3,000 times. Note that the left column illustrates reflected electron images of the cross section of the test sample, and the right column illustrates binarized data of the reflected electron images.
[Fig. 4] Fig. 4 is a scanning electron micrograph illustrating a result of observing a cross section of a test sample of example 1-2 at a magnification of 500 times.
[Fig. 5A] Fig. 5A is a scanning electron micrograph illustrating a result of observing, at a magnification of 1,000 times, a cross section of a sample obtained by embedding an aluminum fiber used in examples 1-1 to 1-3 with a resin.
[Fig. 5B] Fig. 5B is a scanning electron micrograph illustrating a result of observing, at a magnification of 3,000 times, a cross section of a sample obtained by embedding the aluminum fiber used in examples 1-1 to 1-3 with the resin.
[Fig. 6A] Fig. 6A is a scanning electron micrograph illustrating a result of observing a cross section of a test sample of comparative example 1-3 at a magnification of 1,000 times.
[Fig. 6B] Fig. 6B is a scanning electron micrograph illustrating a result of observing a cross section of a test sample of comparative example 1-3 at a magnification of 3,000 times.
[Fig. 7] Fig. 7 is a graph illustrating a relationship between stroke displacement and a load when flexural strength is measured according to JIS T6526 for test samples of example 2-1 and comparative examples 2-1 and 2-2.
[Fig. 8] Fig. 8(a) is a photograph illustrating a test sample of example 2-1 after flexural strength measurement. FIG. 8(b) is a photograph illustrating a test sample of comparative example 2-2 after flexural strength measurement.
[Fig. 9] Fig. 9 includes scanning electron micrographs illustrating results of observing an aluminum fiber according to reference example 3-1 before hydrothermal treatment, an aluminum fiber according to reference example 3-2 after hydrothermal treatment, and an aluminum fiber according to reference example 3-3 after hydrothermal treatment with ammonium addition at magnifications of 1,000 times and 3,000 times, respectively.
[Fig. 10] Fig. 10 is a graph illustrating a result of X-ray diffraction measurement of the surface of an aluminum fiber according to reference example 3-2 after hydrothermal treatment.
[Fig. 11] Fig. 11 is a graph illustrating an X-ray diffraction pattern of hydraulic alumina and patterns of boehmite (AlOOH) and gibbsite (Al(OH)₃) registered in the ICSD.
[Fig. 12] Fig. 12 is a graph illustrating an X-ray diffraction pattern of a test sample of reference example 4 and X-ray diffraction patterns of boehmite and gibbsite registered in the ICSD.

### DESCRIPTION OF EMBODIMENTS

Referring to the drawings, a detailed description is given below of a composite member according to the present embodiment. Note that dimensional ratios in the drawings are exaggerated for convenience of the description and are sometimes different from actual ratios.

### [Composite member]

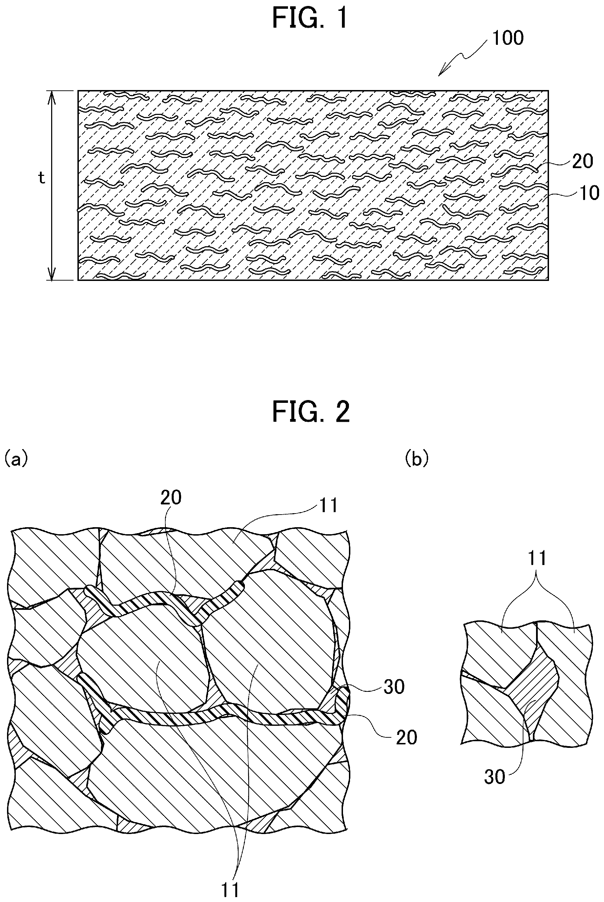

As illustrated in Fig. 1, a composite member 100 according to the present embodiment includes an inorganic matrix part 10 made from an inorganic substance, and a metal fiber 20 present in a dispersed state inside the inorganic matrix part 10.

The inorganic matrix part 10 includes multiple particles 11 made from an inorganic substance, and the particles 11 of the inorganic substance bond with each other to form the inorganic matrix part 10.

The inorganic substance making up the inorganic matrix part 10 preferably includes at least one metallic element selected from the group consisting of an alkali metal, an alkaline earth metal, a transition metal, a base metal, and a semimetal. In this description, the alkaline earth metal includes beryllium and magnesium in addition to calcium, strontium, barium, and radium. The base metal includes aluminum, zinc, gallium, cadmium, indium, tin, mercury, thallium, lead, bismuth, and polonium. The semimetal includes boron, silicon, germanium, arsenic, antimony, and tellurium. Among these, the inorganic substance preferably includes at least one metallic element selected from the group consisting of aluminum, iron, nickel, gallium, and yttrium.

The inorganic substance making up the inorganic matrix part 10 includes an oxide hydroxide of a metallic element mentioned above. The inorganic substance preferably includes an oxide hydroxide of a metallic element mentioned above as a main component. That is, the inorganic substance preferably includes an oxide hydroxide of a metallic element mentioned above in an amount of 50 mol% or more, more preferably in an amount of 80 mol% or more. Such an inorganic substance has high stability against oxygen and water vapor in the atmosphere, and thus arranging the metal fiber 20 inside the inorganic matrix part 10 can reduce contact of the metal fiber 20 with oxygen and water vapor and suppress deterioration of the metal fiber 20. Note that when the inorganic substance includes an oxide hydroxide of a metallic element mentioned above as a main component, the inorganic substance may contain a hydroxide of a metallic element mentioned above.

The inorganic matrix part 10 is preferably a polycrystalline substance. That is, it is preferable that the particles 11 of the inorganic substance be crystalline particles and that the inorganic matrix part 10 be made from an aggregation of many particles 11. When the inorganic matrix part 10 is a polycrystalline substance, the composite member 100 can be obtained having high durability compared to the case where the inorganic matrix part 10 is amorphous. Note that the particles 11 of the inorganic substance are more preferably crystalline particles including at least one metallic element selected from the group consisting of an alkali metal, an alkaline earth metal, a transition metal, a base metal, and a semimetal. The particles 11 of the inorganic substance are preferably crystalline particles including an oxide hydroxide of a metallic element mentioned above. The particles 11 of the inorganic substance are more preferably crystalline particles including an oxide hydroxide of a metallic element mentioned above as a main component.

The metal oxide hydroxide contained in the inorganic substance of the inorganic matrix part 10 can contain aluminum. The metal oxide hydroxide is preferably boehmite. Boehmite is an aluminum oxide hydroxide represented by a composition formula of AlOOH. Boehmite has a property of high chemical stability since it is insoluble in water and hardly reacts with acids and alkalis at room temperature, and also has a property of excellent heat resistance due to high dehydration temperature of around 500 °C. Since boehmite has specific gravity of about 3.07, when the inorganic matrix part 10 is made from boehmite, the composite member 100 can be obtained being lightweight and having excellent chemical stability.

When the inorganic substance making up the inorganic matrix part 10 is boehmite, the particles 11 may be particles only of a boehmite phase, or particles of a mixed phase of boehmite, and aluminum oxide or aluminum hydroxide other than boehmite. For example, the particles 11 may be particles in which a phase of boehmite and a phase of gibbsite (Al(OH)₃) are mixed. In this case, adjacent particles 11 preferably bond via a bonding part 30 made from at least one of an aluminum oxide or aluminum oxide hydroxide. That is, it is preferable that the particles 11 do not bond with each other via an organic binder made from an organic compound and do not bond via an inorganic binder made from an inorganic compound other than aluminum oxide and aluminum oxide hydroxide. Note that when adjacent particles 11 bond via the bonding part 30 made from at least one of aluminum oxide or aluminum oxide hydroxide, the aluminum oxide and aluminum oxide hydroxide may be crystalline or may be amorphous.

Note that in the inorganic matrix part 10 made from boehmite, the percentage of presence of the boehmite phase is preferably 50% by mass or more, more preferably 60% by mass or more, even more preferably 70% by mass or more. By increasing the percentage of the boehmite phase, the inorganic matrix part 10 can be obtained being lightweight and excellent in chemical stability and heat resistance. Note that the percentage of the boehmite phase in the inorganic matrix part 10 can be obtained by measuring the X-ray diffraction pattern of the inorganic matrix part 10 using an X-ray diffraction method and then performing a Rietveld analysis.

The average particle size of the particles 11 of the inorganic substance making up the inorganic matrix part 10 is not particularly limited. However, the average particle size of the particles 11 is preferably within a range of 300 nm or more and 50 µm or less, more preferably of 300 nm or more and 30 µm or less, even more preferably of 300 nm or more and 10 µm or less, particularly preferably of 300 nm or more and 5 µm or less. When the average particle size of the particles 11 of the inorganic substance is within these ranges, the particles 11 firmly bond with each other, and this can increase the strength of the inorganic matrix part 10. When the average particle size of the particles 11 of the inorganic substance is within these ranges, the percentage of pores present inside the inorganic matrix part 10 can be reduced to 20% or less, as described below. Note that in this description, the value of "average particle size" is, unless otherwise stated, a value calculated as an average value of particle size of particles observed in several to several tens of visual fields by using observation means, such as a scanning electron microscope (SEM) or a transmission electron microscope (TEM).

The shape of the particles 11 of the inorganic substance is not particularly limited and can be spherical, for example. The particles 11 may be whisker-like (acicular) particles or scaly particles. Whisker-like particles or scaly particles have higher contact with other particles compared to spherical particles, which easily improves the strength of the inorganic matrix part 10. Thus, by using particles of such a shape for the particles 11, it becomes possible to enhance the strength of the entire composite member 100.

As described above, the inorganic substance making up the inorganic matrix part 10 more preferably includes a metal oxide hydroxide as a main component. Thus, it is preferable that the inorganic matrix part 10 also include a metal oxide hydroxide as a main component. That is, it is preferable that the inorganic matrix part 10 include a metal oxide hydroxide in an amount of 50 mol% or more, more preferably in an amount of 80 mol% or more.

Note that, the inorganic substance making up the inorganic matrix part 10 preferably includes substantially no hydrate. In this description, "an inorganic substance includes substantially no hydrate" means that the inorganic substance does not intentionally contain any hydrate. Thus, when a hydrate is mixed into an inorganic substance as an inevitable impurity, the condition: "an inorganic substance includes substantially no hydrate" is satisfied. Note that since boehmite is a metal oxide hydroxide, boehmite is not included in hydrates in this description.

Also, the inorganic substance making up the inorganic matrix part 10 preferably includes no hydrate of a calcium compound. The calcium compound here is tricalcium silicate (alite, SCaO·SiC₂), dicalcium silicate (belite, 2CaO·SiO₂), calcium aluminate (3CaO·Al₂O₃), calcium aluminoferrite (4CaO·Al₂O₃·Fe₂O₃), or calcium sulfate (CaSO₄·2H₂O). When the inorganic substance making up the inorganic matrix part 10 includes a hydrate of a calcium compound mentioned above, the composite member obtained may have a porosity exceeding 20% in the cross section of the inorganic matrix part. Thus, the inorganic substance preferably includes no hydrate of a calcium compound mentioned above. The inorganic substance making up the inorganic matrix part 10 also preferably includes no phosphate cement, zinc phosphate cement, and calcium phosphate cement. With the inorganic substance not including these cements, it becomes possible to cause the obtained composite member to have a porosity of 20% or less.

The composite member 100 includes the metal fiber 20 made from a metal. The metal fiber 20 is dispersed inside the inorganic matrix part 10 and is fixed in contact with the inorganic matrix part 10. The metal fiber 20 used may be made entirely from a pure metal or an alloy, or may be made from a resin as a core part and coated with a metal as a sheath part. However, in the present embodiment, the metal fiber 20 is preferably a fiber made from a pure metal or an alloy.

As the metal making up the metal fiber 20, at least one metallic element selected from the group consisting of gold, silver, copper, platinum, iridium, palladium, ruthenium, rhodium, titanium, aluminum, tantalum, niobium, tungsten, molybdenum, vanadium, magnesium, chromium, iron, cobalt, nickel, zinc, tin, and lead can be used. The metal making up the metal fiber 20 may be a single element from among these metallic elements, or an alloy of any combination of these metallic elements.

The metal fiber 20 preferably has malleability. As is described below, the composite member 100 can be produced using a pressure heating method. Since the metal fiber 20 has malleability, the metal fiber 20 plastically deforms along the shape of the particles 11 when pressurized, and can be fixed to the particles 11 of the inorganic matrix part 10. Note that examples of metals having high malleability include gold, silver, lead, copper, and aluminum. Thus, the metal fiber 20 is preferably a fiber made from gold, silver, lead, copper, or aluminum, or a fiber made from an alloy including at least one of gold, silver, lead, copper, or aluminum.

The metal fiber 20 preferably has ductility. As described above, the inorganic matrix part 10 itself is formed by bonding particles 11 of the inorganic substance with each other, and thus has a property of high hardness but easy brittle fracture. However, due to the ductility of the metal fiber 20, when an external force is applied to the inorganic matrix part 10, the metal fiber 20 can extend in the inorganic matrix part 10. Consequently, the brittle fracture of the inorganic matrix part 10 is suppressed, and the generation of cracks and the like is suppressed, thereby increasing the bending stress of the composite member and improving its mechanical strength. Note that examples of metals having high ductility include gold, silver, platinum, iron, and nickel. Thus, the metal fiber 20 is preferably a fiber made from gold, silver, platinum, iron, or nickel, or a fiber made from an alloy including at least one of gold, silver, platinum, iron, and nickel.

The aspect ratio (fiber length/fiber diameter) of the metal fiber is preferably 100 or more, more preferably 200 or more, even more preferably 500 or more, and particularly preferably 1,000 or more. The fiber diameter of the metal fiber 20 is not particularly limited and can be set to a range of 1 µm or more and 100 µm or less. By increasing the aspect ratio of the metal fiber 20, the particles 11 of the inorganic substance are easily connected to each other through the metal fiber 20. Thus, even when an external force is applied to the inorganic matrix part 10, the generation of cracks or the like can be suppressed. Moreover, even if cracks occur in the inorganic matrix part 10, by having dispersed the metal fiber 20, the cracked surfaces can be connected and the fracture of the inorganic matrix part 10 can be suppressed.

In the composite member 100, the metal fiber 20 may be oriented mainly in a predetermined direction inside the inorganic matrix part 10. Here, "the metal fiber is oriented mainly in a predetermined direction" means that when the composite member 100 is observed using a microscope, more than half of multiple fibers visible in the field of view is oriented in the substantially same specific direction. For example, when the composite member 100 has a plate shape, the metal fiber 20 may be oriented mainly in a direction parallel to the surface (main plane) inside the inorganic matrix part 10. When the composite member 100 has a rod shape, the metal fiber 20 may be oriented mainly in the longitudinal direction inside the inorganic matrix part 10. As described above, since the metal fiber 20 is oriented in a predetermined direction in the composite member 100, the metal fiber 20 can extend when an external force is applied from a direction perpendicular to the predetermined direction. Consequently, the bending stress of the composite member 100 increases, and thus the mechanical strength can be improved.

In the composite member 100, the metal fiber 20 may be included in an amount of 10% by volume or more. As the amount of the metal fiber 20 contained in the composite member 100 increases, the bending stress of the composite member 100 can be increased. Thus, from the viewpoint of enhancing the mechanical strength of the composite member 100, the lower limit of the amount of the metal fiber 20 contained in the composite member 100 is preferably 10% by volume. Note that the lower limit of the amount of the metal fiber 20 contained in the composite member 100 is preferably 20% by volume, and more preferably 30% by volume. The upper limit of the amount of the metal fiber 20 contained in the composite member 100 is preferably 80% by volume, and more preferably 70% by volume.

In the composite member 100, the metal oxide hydroxide and the metal fiber 20 may include the same metallic element. Specifically, the metal oxide hydroxide and the metal fiber 20 can both include aluminum. When the metal oxide hydroxide includes aluminum, the inorganic matrix part 10 may be made from boehmite. When the metal fiber 20 includes aluminum, the metal fiber 20 may be a fiber made from pure aluminum or a fiber made from an aluminum alloy. When the metal fiber 20 includes aluminum, since a boehmite layer is formed on the surface of the metal fiber when the composite member 100 is produced, the inorganic matrix part 10 and the metal fiber 20 can be fixed.

The composite member 100 can have a configuration in which the inorganic matrix part 10 and the metal fiber 20 are fixed to each other through a boehmite layer which is formed on the surface of the metal fiber 20 and different from the inorganic matrix part 10. As is described below, the composite member 100 can be obtained by mixing a precursor of the inorganic substance making up the inorganic matrix part 10, the metal fiber, and a solvent to obtain a mixture, and then pressurizing and heating the mixture at a temperature of 50 to 300 °C and a pressure of 10 to 600 MPa. Specifically, when the inorganic matrix part 10 is made from boehmite, the composite member 100 can be obtained by mixing the hydraulic alumina, the metal fiber, and water to obtain a mixture, and then pressurizing and heating the mixture at a temperature of 50 to 300 °C and a pressure of 10 to 600 MPa.

Here, when the metal fiber includes aluminum, a layer made from boehmite is formed on the surface of the metal fiber because aluminum oxide (anodized aluminum) and/or aluminum on the surface of the metal fiber reacts with water in the pressurizing and heating process. Thus, when the inorganic matrix part 10 is made from boehmite, since the affinity between the particles 11 and the boehmite layer on the surface of the metal fiber 20 is enhanced, the particles 11 and the metal fiber 20 can be fixed to each other through the formed boehmite layer. In addition, the boehmite layer can absorb the shear force generated between the inorganic matrix part 10 and the metal fiber 20 and suppress their separation. Furthermore, the aluminum making up the metal fiber 20 has also high ductility. Thus, even when an external force is applied to the inorganic matrix part 10, by the effect of the aluminum fiber, it becomes possible to suppress the generation of cracks and the like and to increase the bending stress.

In the composite member 100, the porosity in the cross section of the inorganic matrix part 10 is preferably 20% or less. That is, when the cross section of the inorganic matrix part 10 is observed, the average value of the percentage of pores per unit area is preferably 20% or less. When the porosity is 20% or less, the metal fiber 20 can be sealed inside the dense inorganic substance. Thus, since the contact ratio between oxygen and water vapor from the outside of the composite member 100 and the metal fiber 20 is reduced, the oxidation of the metal fiber 20 can be suppressed for a long period. Furthermore, in this case, since the inorganic matrix part 10 has few internal pores and the inorganic substance is dense, the composite member 100 can have high strength. Note that the porosity in the cross section of the inorganic matrix part 10 is preferably 15% or less, more preferably 10% or less, and even more preferably 5% or less. The smaller the porosity in the cross section of the inorganic matrix part 10, the more the contact between the metal fiber 20, and oxygen and water vapor is suppressed, thereby preventing the deterioration of the metal fiber 20.

In this specification, porosity can be determined as follows. First, the cross section of the inorganic matrix part 10 is observed to distinguish the inorganic matrix part 10, the metal fiber 20, and pores. Then, the unit area and the area of pores in the unit area are measured to obtain the percentage of pores per unit area. After the percentage of pores per unit area is obtained at multiple locations, the average value of the percentage of pores per unit area is defined as the porosity. Note that when observing the cross section of the inorganic matrix part 10, an optical microscope, a scanning electron microscope (SEM), or a transmission electron microscope (TEM) is usable. The unit area and the area of pores in the unit area may be measured by binarizing an image observed using the microscope.

Note that the shape of the composite member 100 is not particularly limited and can be a plate shape, for example. The thickness t of the composite member 100 is not particularly limited and can be 50 µm or more, for example. As is described below, since the composite member 100 is formed using a pressure heating method, the composite member 100 can be easily obtained having a large thickness. Note that the thickness t of the composite member 100 can be 1 mm or more, or 1 cm or more. The upper limit of the thickness t of the composite member 100 is not particularly limited and can be 50 cm, for example.

As described above, the composite member 100 according to the present embodiment includes the inorganic matrix part 10 made from an inorganic substance including a metal oxide hydroxide, and the metal fiber 20 present in a dispersed state inside the inorganic matrix part 10 and having an aspect ratio of 100 or more. In the composite member 100, the porosity in the cross section of the inorganic matrix part 10 is 20% or less. In the composite member 100, since the metal fiber 20 is dispersed inside the inorganic matrix part 10, the particles 11 of the inorganic substance are connected to each other via the metal fiber 20, and the flexural strength and mechanical strength of the composite member 100 can be enhanced. Furthermore, since the porosity in the cross section of the composite member 100 is 20% or less, the contact between oxygen and water vapor, and the metal fiber 20 is suppressed, and the metal fiber 20 can be stably dispersed over a long period.

### [Method for producing composite member]

Next, a method for producing the composite member according to the present embodiment will be described. The composite member 100 can be produced by heating a mixture of precursor particles of an inorganic substance making up the inorganic matrix part 10 and a metal fiber under pressure in a state including a solvent. By using such a pressure heating method, the precursor particles of the inorganic substance react with the solvent and the particles bond with each other, and thus the inorganic matrix part 10 inside which the metal fiber 20 is dispersed can be formed.

Specifically, the powder of the precursor of the inorganic substance making up the inorganic matrix part 10 and the metal fiber are mixed to prepare a mixture. The powder of the inorganic substance precursor and the metal fiber may be mixed in air or in an inert atmosphere. As the precursor of the inorganic substance making up the inorganic matrix part 10, one that generates a metal oxide hydroxide when heated and pressurized together with a solvent is used. For example, when the inorganic substance making up the inorganic matrix part 10 is boehmite, hydraulic alumina can be used as the precursor of the inorganic substance.

Next, a solvent is added to the mixture. As the solvent, one that reacts with an inorganic substance precursor to form a metal oxide hydroxide is used. As such a solvent, at least one selected from the group consisting of water, an acidic aqueous solution, an alkaline aqueous solution, an alcohol, a ketone, and an ester can be used. As the acidic aqueous solution, an aqueous solution having a pH of 1 to 3 can be used. As the alkaline aqueous solution, an aqueous solution having a pH of 10 to 14 can be used. As the acidic aqueous solution, an aqueous solution of an organic acid is preferably used. As the alcohol, an alcohol with 1 to 12 carbon atoms is preferably used.

Then, the mixture including the inorganic substance precursor, the metal fiber and the solvent is filled inside a die. After the mixture is filled in the die, the die may be heated as necessary. By applying pressure to the mixture inside the die, the inside of the die enters a high pressure state. At this time, the inorganic substance precursor and the metal fiber are densified and the particles of the inorganic substance precursor bond with each other, and at the same time, the inorganic substance precursor reacts with the solvent to form a metal oxide hydroxide. Consequently, the metal fiber 20 can be dispersed inside the inorganic matrix part 10 made from the metal oxide hydroxide.

The pressure heating condition of the mixture including the inorganic substance, the metal fiber, and the solvent is not particularly limited as long as the solvent reacts with the inorganic substance precursor to form a metal oxide hydroxide. For example, the mixture including the inorganic substance precursor, the metal fiber, and the solvent is preferably heated to 50 to 300 °C and then pressurized at a pressure of 10 to 600 MPa. Note that the temperature at which the mixture including the inorganic substance, the metal fiber, and the solvent is heated is more preferably 80 to 250 °C, and more preferably 100 to 200 °C. The pressure at which the mixture including the inorganic substance, the metal fiber, and the solvent is pressurized is more preferably 50 to 600 MPa and even more preferably 200 to 600 MPa.

The composite member 100 can be obtained by taking out the molded body from the inside of the die.

Here, a method for producing the composite member 100 where the inorganic substance making up the inorganic matrix part 10 is boehmite will be described. The composite member 100 where the inorganic substance is boehmite can be produced by mixing hydraulic alumina which is a precursor of the inorganic substance, a metal fiber, and a solvent including water, and then heating the mixture under pressure. The hydraulic alumina is an oxide obtained through heat treatment of an aluminum hydroxide and includes p-alumina. Such hydraulic alumina has a property of bonding and curing through a hydration reaction. Thus, by using the pressure heating method, the hydration reaction of the hydraulic alumina progresses to bond particles of the hydraulic alumina to each other, and the crystal structure changes to that of boehmite, thereby forming the inorganic matrix part 10.

Specifically, a mixture is first prepared by mixing a hydraulic alumina powder, a metal fiber, and a solvent including water. The solvent including water is preferably pure water or ion-exchanged water. However, the solvent including water may include an acidic substance or an alkaline substance other than water. It is sufficient that the solvent including water include water as the main component, and for example, an organic solvent (e.g., an alcohol) may be included.

Preferably, the amount of the solvent added to the hydraulic alumina is an amount sufficient to proceed the hydration reaction of the hydraulic alumina. The amount of the solvent added to the hydraulic alumina is preferably within a range of 20% to 200% by mass, and more preferably of 50% to 150% by mass.

Next, the mixture obtained by mixing the hydraulic alumina, the metal fiber, and the solvent including water is filled inside a die. After filling the mixture in the die, the die may be heated as necessary. By applying pressure to the mixture inside the die, the inside of the die enters a high pressure state. At this time, the hydraulic alumina is highly filled, and the particles of the hydraulic alumina bond with each other, resulting in high density. Specifically, by adding water to the hydraulic alumina, the hydraulic alumina undergoes a hydration reaction to form boehmite and aluminum hydroxide on the surface of the hydraulic alumina particles. By heating and pressurizing the mixture inside the mold, the generated boehmite and aluminum hydroxide then diffuse mutually among the adjacent hydraulic alumina particles, and the hydraulic alumina particles gradually bond with each other. After that, the dehydration reaction proceeds by heating, and the crystalline structure is changed from aluminum hydroxide to boehmite. Note that it is supposed that the hydration reaction of the hydraulic alumina, the mutual diffusion among the hydraulic alumina particles, and the dehydration reaction proceed almost simultaneously.

By taking out the molded body from the inside of the die, the composite member 100 is obtained in which multiple particles 11 bond with each other via at least one of an aluminum oxide or an oxide hydroxide.

As described above, the method for producing the composite member 100 includes a step of obtaining a mixture by mixing a precursor of an inorganic substance making up the inorganic matrix part 10, a metal fiber, and a solvent for reacting with the inorganic substance precursor to form a metal oxide hydroxide. The method for producing the composite member 100 further includes a step of pressurizing and heating the mixture. The pressure heating condition of the mixture is preferably a temperature of 50 to 300 °C and a pressure of 10 to 600 MPa. In the producing method according to the present embodiment, since the composite member 100 is molded under such a low temperature condition, the composite member 100 can be obtained which suppresses the deterioration of the metal fiber and has an excellent mechanical strength.

Furthermore, in the producing method according to the present embodiment, a mixture obtained by mixing a precursor of an inorganic substance, a metal fiber, and a solvent is heated and pressurized, and thus the inorganic substance aggregates to form a dense inorganic matrix part 10. Consequently, the pores inside the inorganic matrix part 10 are reduced, and it is possible to obtain the composite member 100 having high strength while suppressing the oxidative deterioration of the metal fiber 20.

### [Use of composite member]

Next, the use of the composite member 100 according to the present embodiment will be described. The composite member 100 can be used in a structure as it has a high mechanical strength and can be formed into a plate shape having a larger thickness as described above. As a structure provided with the composite member 100, housing equipment, housing members, building materials, and buildings are preferable. Since housing equipment, housing members, building materials, and buildings are in great demand in human life, the use of the composite member 100 in the structures can be expected to have the effect of creating a new and large market.

The composite member according to the present embodiment can be used as a building member. In other words, a building member according to the present embodiment includes the composite member 100. A building member is a member produced for building, and the composite member 100 can be used at least partially in the present embodiment. As described above, the composite member 100 can be formed in a plate shape having a large thickness, and further has high strength and high durability. Thus, the composite member 100 can be suitably used as a building member. Examples of the building member include an exterior wall material (siding) and a roof material. Further examples of the building member include road materials and exterior materials.

Furthermore, the composite member according to the present embodiment can also be used for an interior member. In other words, an interior member according to the present embodiment includes the composite member 100. Examples of the interior member include a bathtub, a kitchen counter, a washbasin, and a flooring material.

### EXAMPLES

The present embodiment will be described in more detail below with examples, comparative examples, and reference examples, but the present embodiment is not limited thereto.

### [Example 1]

### (Preparation of test samples)

### <Example 1-1>

First, as the hydraulic alumina, hydraulic alumina BK-112 manufactured by SUMITOMO CHEMICAL COMPANY, LIMITED was prepared. Note that the hydraulic alumina has a median particle size of 16 µm. As a result of analyzing the hydraulic alumina powder using a powder X-ray diffraction method, it was found to be a mixture of boehmite and gibbsite (aluminum hydroxide) as described below. The hydraulic alumina also included p-alumina. Further, as a fiber material, an aluminum fiber (product number: TW/Al/20) manufactured by NIKKO TECHNO, Ltd. was prepared. Note that the average fiber diameter of the aluminum fiber was about 20 µm, and the average fiber length was 5 mm or more.

The hydraulic alumina and aluminum fiber were weighed in such a manner that hydraulic alumina : aluminum fiber = 90% by volume : 10% by volume, and then the hydraulic alumina and aluminum fiber were mixed using an agate mortar and pestle to obtain a mixed powder. Next, the ion-exchanged water was weighed to be 80% by mass relative to the hydraulic alumina, and then the mixed powder and ion-exchanged water were mixed using an agate mortar and pestle to obtain a mixture.

Then, the obtained mixture was put inside a cylindrical molding die (Φ10) having an internal space. The mixture was then heated and pressurized under conditions of 400 MPa, 180 °C, and 20 minutes to obtain a test sample of this example.

### <Example 1-2>

A test sample of this example was obtained in the same manner as in example 1-1 except that the aluminum fiber was added in such a manner that hydraulic alumina : aluminum fiber = 80% by volume : 20% by volume.

### <Example 1-3>

A test sample of this example was obtained in the same manner as in example 1-1 except that the aluminum fiber was added in such a manner that hydraulic alumina : aluminum fiber = 50% by volume : 50% by volume.

### <Comparative example 1-1>

A test sample of this example was obtained in the same manner as in example 1-1 except that no aluminum fiber was added.

### <Comparative example 1-2>

As an alumina powder (Al₂O₃), advanced alumina AA-18 manufactured by SUMITOMO CHEMICAL COMPANY, LIMITED was prepared. Note that advanced alumina AA-18 is a single crystal particle of α-alumina having a shape close to a polyhedral spherical shape, and the median particle size is about 20.3 µm. A test sample of this example was obtained in the same manner as in example 1-3 except that the alumina powder was added instead of the aluminum fiber.

### <Comparative example 1-3>

As the fiber material, DENKAALCEN (registered trademark), an alumina fiber manufactured by Denka Company Limited, was prepared. Note that the average fiber diameter of the alumina fiber was 3 to 5 µm. A test sample of this example was obtained in the same manner as in example 1-2 except that the alumina fiber was added instead of the aluminum fiber.

Table 1 collectively illustrates the type and amount of aggregate added to each test sample and the relative density of each test sample. Note that the relative density was obtained as follows.

First, the actual specific gravity was determined from the volume and mass of the test sample in each example. In addition, the theoretical specific gravity of each test sample was determined from the percentage of the boehmite and aggregate included in each test sample. That is, in example 1-1, the boehmite is 90% by volume and the aluminum fiber was 10% by volume, and thus the theoretical specific gravity was determined from the percentage and specific gravities of the boehmite and aluminum. The actual specific gravity relative to the theoretical specific gravity ([actual specific gravity] / [theoretical specific gravity] × 100) was set as the relative density.

**[Table 1]**

| | Example 1-1 | Example 1-2 | Example 1-3 | Comparative example 1-2 | Comparative example 1-2 | Comparative example 1-3 |
|---|---|---|---|---|---|---|
| Aggregate | Aluminum fiber | | | None (hydraulic alumina only) | Alumina particles | Alumina fiber |
| Amount of aggregate added (% by volume) | 10 | 20 | 50 | 0 | 50 | 20 |
| Relative density (%) | 78.2 | 77.5 | 82.8 | 72.5 | 75.1 | 72.4 |
| Flexural strength (MPa) | 52.4 | 90.2 | 142.9 | 51.4 | 22.5 | 27.0 |

### (Measurement of flexural strength)

The flexural strength of the test sample of each example was measured according to Japanese Industrial Standard JIS T6526:2018 (Dental ceramic materials). Note that the flexural strength of the test samples was measured using the biaxial flexure test of JIS T6526. The maximum values of the flexural strength (stress) of test samples of respective examples are illustrated in Table 1 together.

It is evident from examples 1-1 to 1-3 and comparative example 1 that the addition of the aluminum fiber, which is a metal fiber, increases the bending stress and improves the mechanical strength. In particular, it is evident from example 1-3 and comparative example 1-1 that when the amount of the aluminum fiber contained is 50% by volume, the flexural strength is improved by nearly 3 times compared with the case where no aluminum fiber is added. It is also evident from examples 1-1 to 1-3 that the flexural strength is also improved as the amount of the aluminum fiber added increases. Thus, it is supposed that the flexural strength is further improved by increasing the amount of the aluminum fiber added to 50% by volume or more.

In contrast, from comparative example 1-1 and comparative example 1-2, it is evident that the flexural strength is not improved by adding the alumina particles, but on the contrary, it is greatly reduced. Similarly, from comparative example 1-1 and comparative example 1-3, it is evident that the flexural strength is not improved by adding the alumina fiber, but on the contrary, it is greatly reduced.

### (Microscopic observation)

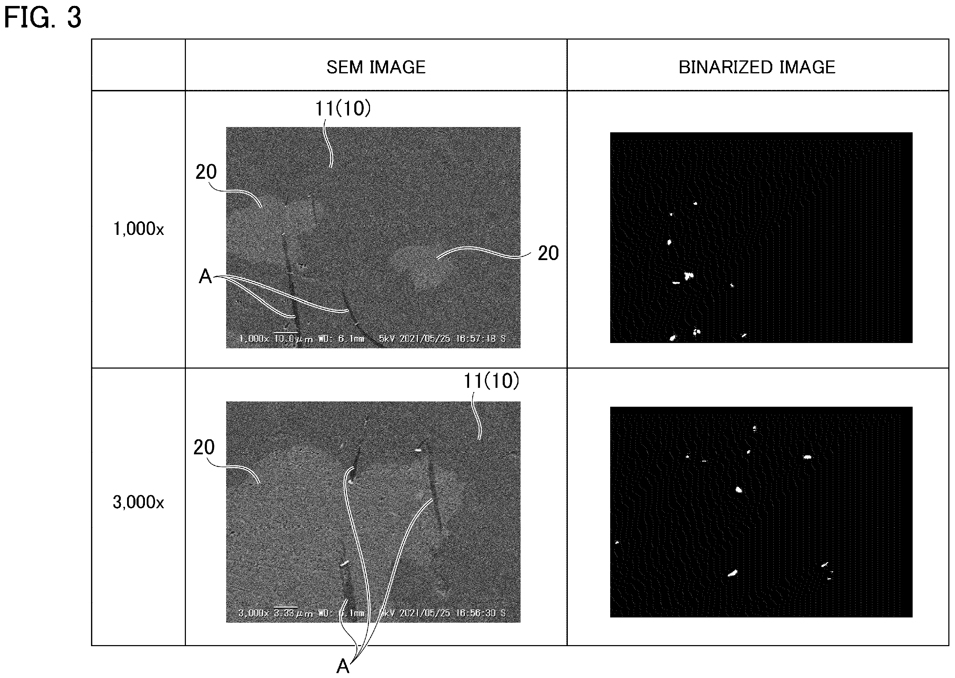

The test sample of example 1-2 was subjected to a cross-sectional observation using a scanning electron microscope (SEM). Fig. 3 includes SEM photographs illustrating the results of cross-sectional observation of the test sample of example 1-2 at magnifications of 1,000 times and 3,000 times. Fig. 3 illustrates a cross section of the aluminum fiber 20 present in the inorganic matrix part 10. Note that black linear parts indicated by a reference sign A in Fig. 3 are polishing scratches caused during polishing of the test sample. As illustrated in Fig. 3, it is evident that there is almost no vacant spaces between the inorganic matrix part 10 and the aluminum fiber 20 and they adhere to each other. That is, it is evident that the aluminum fiber 20 is fixed to the inorganic matrix part 10 through the plastic deformation of the aluminum fiber 20 during the pressurization process.

Fig. 3 also illustrates binarized images of reflected electron images observed at magnifications of 1,000 times and 3,000 times. By binarizing the reflected electron images, the pore part can be clarified. In the binarized images, the black part is the inorganic matrix part 10 and the aluminum fiber 20, and white parts are pores. The area percentage of the pore part was calculated from the binarized images, and the porosity was determined. Consequently, the porosity of the reflected electron image at 1,000 times magnification was 0.226%, and the porosity of the reflected electron image at 3,000 times magnification was 0.21% in Fig. 3.

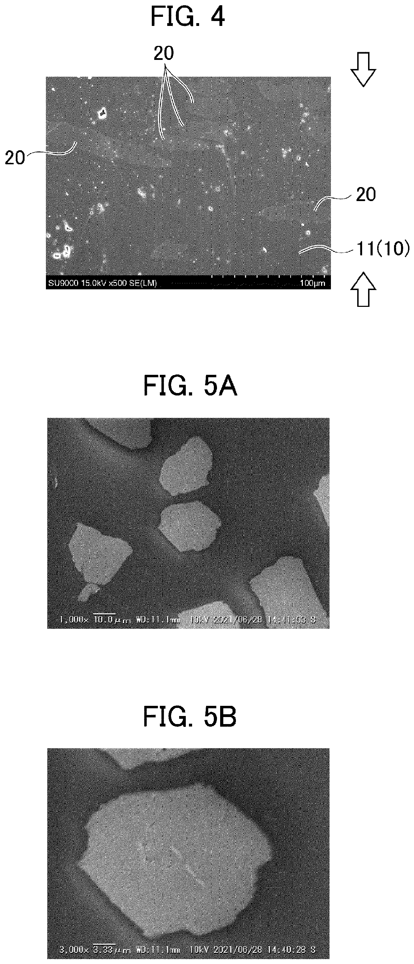

Fig. 4 is an SEM photograph illustrating the result of observing a cross section of the test sample of example 1-2 at a magnification of 500 times. The arrows in Fig. 4 indicate pressure directions (pressing directions) when a mixture of hydraulic alumina, aluminum fiber, and ion-exchanged water is put into a molding die and pressurized. As illustrated in Fig. 4, it is evident that there is almost no vacant spaces between the inorganic matrix part 10 and the aluminum fiber 20 and they adhere to each other. Further, it is evident that the cross section of the aluminum fiber 20 is flattened along a direction substantially perpendicular to the pressing directions. From this, it is evident that the aluminum fiber 20 is fixed to the inorganic matrix part 10 through the plastic deformation of the aluminum fiber 20 due to pressing pressure.

For reference, Fig. 5A illustrates the result of observing, at a magnification of 1000 times, the cross section of a sample obtained by embedding the aluminum fiber with a resin. Fig. 5B illustrates the result of observing, at a magnification of 3,000 times, the cross section of a sample obtained by embedding the aluminum fiber with the resin. That is, Figs. 5A and 5B illustrate the cross sections of the aluminum fiber before the mixture of the hydraulic alumina, the aluminum fiber, and ion-exchanged water is put in a molding die and pressurized. It is evident from Figs. 4, 5A, and 5B that when the mixture is put in a molding die and pressurized, the aluminum fiber plastically deforms into a flat shape due to pressing pressure.

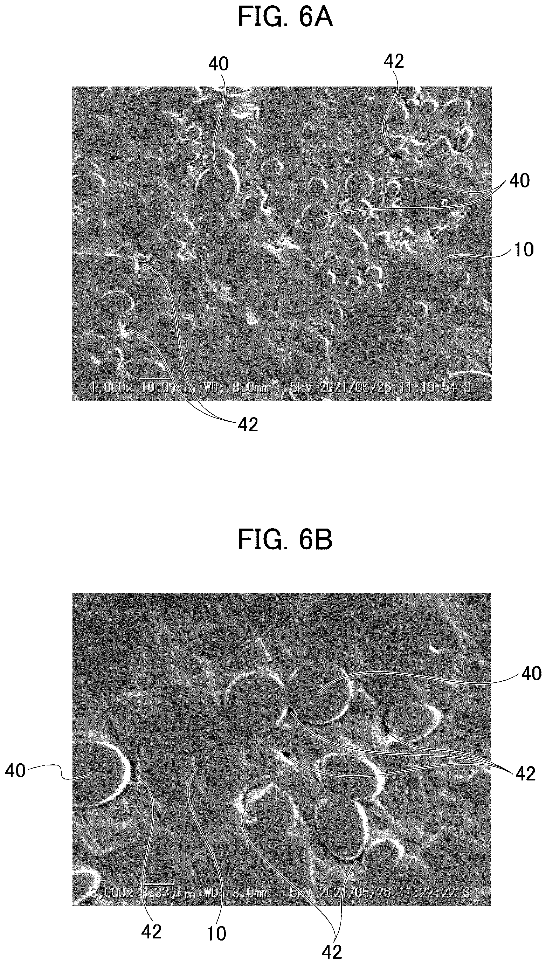

Fig. 6A is an SEM photograph illustrating the result of observing a cross section of the test sample of comparative example 1-3 at a magnification of 1,000 times. Fig. 6B is an SEM photograph illustrating the result of observing a cross section of the test sample of comparative example 1-3 at a magnification of 3,000 times. Figs. 6A and 6B illustrate the cross sections of the alumina fiber 40 present in the inorganic matrix part 10. As is evident from Figs. 6A and 6B, in the test samples of comparative examples 1 to 3, it is evident that the alumina fiber 40 is not plastically deformed in a flat state. Further, it is evident that there are many pores 42 between the inorganic matrix part 10 and the alumina fiber 40.

### (Vickers hardness measurement)

Vickers hardness was measured according to JIS R1610 (Test methods for hardness of fine ceramics) for the test samples of example 1-2 and comparative example 1-3. Consequently, the Vickers hardness of the test sample of example 1-2 including the aluminum fiber in an amount of 20% by volume was 2.0 GPa. The Vickers hardness of the test sample of comparative example 1-3 including the alumina fiber in an amount of 20% by volume of was 2.3 GPa.

### (Evaluation)

Since aluminum is a metal with high malleability, the aluminum fiber 20 can be fixed to the inorganic matrix part 10 through plastic deformation, as illustrated in Figs. 3 and 4. In addition, aluminum has a ductile property. Thus, by dispersing the aluminum fiber in the inorganic matrix part 10, even when an external force is applied to the inorganic matrix part 10, the occurrence of cracks and the like can be suppressed. Consequently, the bending stress of the composite member increases, and the mechanical strength can be improved.

In contrast, since alumina is a material with small ductility, even if it is dispersed in the inorganic matrix part 10, it is difficult to suppress the brittle fracture of the inorganic matrix part 10. In addition, alumina is a material which is difficult to plastically deform due to its small malleability. Thus, it is difficult for the inorganic matrix part and the alumina fiber to adhere to each other, and many pores are generated between them. As described above, alumina is poor in ductility, and alumina and the inorganic matrix part are difficult to adhere to each other. Thus, it is thought that the bending stress of the composite member to which alumina particles or alumina fiber is added as an aggregate has decreased.

### [Example 2]

### (Preparation of test samples)

### <Example 2-1>

Using the same method as in example 1-3, a test sample of this example was obtained in which the aluminum fiber was added in an amount of 50% by volume to an inorganic matrix part made from boehmite.

### <Comparative example 2-1>

As the aluminum powder, an aluminum powder manufactured by FUJIFILM Wako Pure Chemical Corporation was prepared. Note that the aluminum powder has a particle size of about 53 to 150 µm and an aspect ratio of 2 or less. In the same manner as in example 1-3 except that the aluminum powder was used instead of the aluminum fiber, a test sample of this example was obtained in which the aluminum powder was added in amount of 50% by volume to an inorganic matrix part made from boehmite.

### <Comparative example 2-2>

Using the same producing method as in comparative example 1-1, a test sample of this example was obtained in which no aggregate was added to an inorganic matrix part made from boehmite.

### (Measurement of flexural strength)

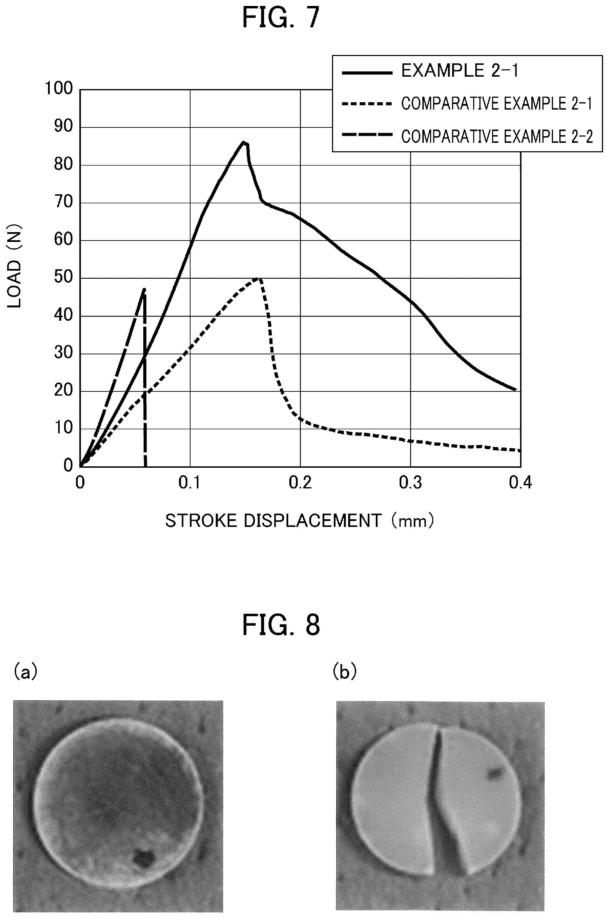

The flexural strength of the test sample of each example was measured according to Japanese Industrial Standard JIS T6526:2018. Note that the flexural strength of the test samples was measured using the biaxial flexure test of JIS T6526. The measurement result of the test sample of each example is illustrated in Fig. 7. Fig. 7 is a graph illustrating the relationship between stroke displacement and a load when flexural strength is measured according to JIS T6526 for the test sample of each example.

As illustrated in Fig. 7, it is evident that the test sample of example 2-1 including the aluminum fiber as an aggregate has a greater increase in maximum breaking strength (maximum flexural strength) than the test sample of comparative example 2-2 without an aggregate. In addition, although the test sample of example 2-1 has a lower load (flexural strength) when the stroke displacement exceeds 0.15 mm, the load tends to decrease gradually. That is, the test sample of example 2-1 indicated ductile behavior due to the aluminum fiber.

In contrast, in the test sample of comparative example 2-2 without an aggregate, the load (flexural strength) rapidly decreased to 0 N when the stroke displacement exceeded 0.06 mm. That is, the test sample of comparative example 2-2 resulted in brittle fracture because it was formed by bonding particles of the inorganic substance.

Fig. 8(a) is a photograph illustrating the test sample of example 2-1 after flexural strength measurement, and (b) is a photograph illustrating the test sample of comparative example 2-2 after flexural strength measurement. It is evident that the test sample of comparative example 2-2 after flexural strength measurement is divided due to brittle fracture. In contrast, it is evident that the test sample of example 2-1 after flexural strength measurement has maintained a disk shape even though cracks have occurred.

Note that the test sample of comparative example 2-1 including the aluminum powder as an aggregate slightly improved in maximum breaking strength (maximum flexural strength) compared with the test sample of comparative example 2-2 without an aggregate. Furthermore, the test sample of comparative example 2-1 also indicated ductile behavior due to the aluminum powder. However, the test sample of comparative example 2-1 resulted in a greater reduction in maximum breaking strength than the test sample of example 2-1. That is, in the test sample of example 2-1, since the aluminum fiber is dispersed in the inorganic matrix part 10, particles of the inorganic substance are connected to each other via the aluminum fiber. Furthermore, the aluminum fiber and particles of the inorganic substance can adhere to each other due to the malleability of the aluminum fiber. Thus, it is though that the maximum breaking strength was enhanced due to the aluminum fiber having high ductility.

In contrast, in the test sample of comparative example 2-1, although aluminum particles are dispersed inside the inorganic matrix part 10, it is difficult for particles of the inorganic substance to be connected with each other via the aluminum particles. Thus, it is thought that the maximum breaking strength was not sufficiently improved in the test sample of comparative example 2-1.

### [Example 3]

### (Preparation of test samples)

### <Reference example 3-1>

An aluminum fiber (product number: TW/Al/20) manufactured by NIKKO TECHNO, Ltd. was used as the test sample of this example.

### <Reference example 3-2>

The same aluminum fiber as in reference example 3-1 and ion-exchanged water were sealed in a pressure-resistant container, and after heating at 180 °C for 6 hours, the aluminum fiber was taken out from the pressure-resistant container. In this way, a test sample of this example which was subjected to hydrothermal treatment was obtained.

### <Reference example 3-3>

The same aluminum fiber as in reference example 3-1, ion-exchanged water, and ammonia were sealed in a pressure-resistant container, and after heating at 180 °C for 6 hours, the aluminum fiber was taken out from the pressure-resistant container. In this way, a test sample of this example which was subjected to hydrothermal treatment with ammonia addition was obtained.

### (Microscopic observation)

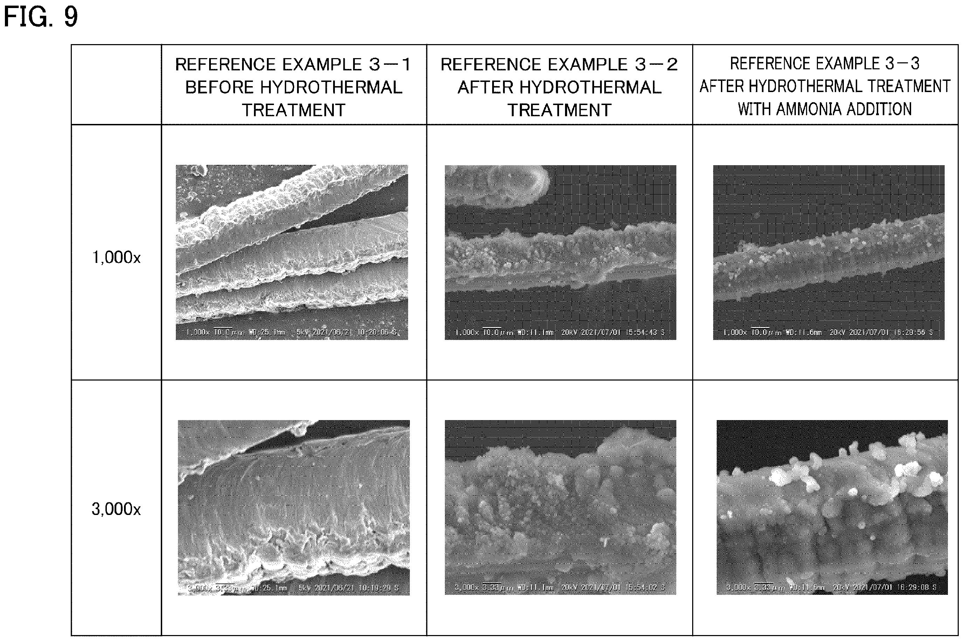

The test samples of reference examples 3-1 to 3-3 were subjected to a surface observation using a scanning electron microscope (SEM). Fig. 9 includes SEM photographs of the surfaces of the test samples of reference examples 3-1 to 3-3 at magnifications of 1,000 times and 3,000 times.

As illustrated in Fig. 9, it can be confirmed that the aluminum fiber of reference example 3-2 after the hydrothermal treatment has irregularities formed on the surface and further multiple granules are formed compared with the aluminum fiber of reference example 3-1 before the hydrothermal treatment. It can also be confirmed that the aluminum fiber of reference example 3-3 after the hydrothermal treatment with ammonia addition has irregularities formed on the surface and further multiple granules are formed.

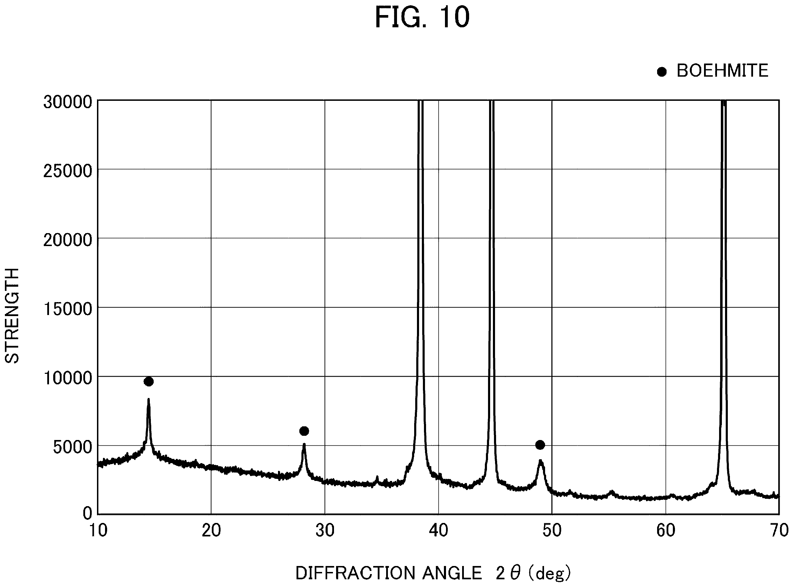

Fig. 10 illustrates the result of X-ray diffraction measurement of the surface of the aluminum fiber according to reference example 3-2 after hydrothermal treatment. From Fig. 10, it is evident that since the peak of boehmite was observed in the aluminum fiber after hydrothermal treatment, the surface of the aluminum fiber is oxidized to form a boehmite layer through the hydrothermal treatment of the aluminum fiber. Note that, as in reference example 3-3, since the hydrothermal treatment is promoted by performing the hydrothermal treatment with ammonia addition, it is thought that a boehmite layer is also formed on the surface of the aluminum fiber of reference example 3-3.

Here, as in examples 1-1 to 1-3, when a mixture of hydraulic alumina, aluminum fiber, and ion-exchanged water is heated and pressurized under conditions of 400 MPa, 180 °C, and 20 minutes, it is assumed that the same reaction as the hydrothermal treatment described above occurs in the aluminum fiber. Thus, it is considered that a boehmite layer is formed on the surface of the aluminum fiber. As is described below, when a mixture of the hydraulic alumina and ion-exchanged water is subjected to pressure heat treatment, the composition of the hydraulic alumina changes to that of boehmite. Thus, in the test samples of examples 1-1 to 1-3, it can be assumed that the inorganic matrix part made from boehmite tightly bonds with the aluminum fiber via the formed boehmite layer.

### [Example 4]

### (Preparation of test samples)

### <Reference example 4>

First, as the hydraulic alumina, hydraulic alumina BK-112 manufactured by SUMITOMO CHEMICAL COMPANY, LIMITED was prepared. Next, the ion-exchanged water was weighed to be 80% by mass relative to the hydraulic alumina, and then the hydraulic alumina and ion-exchanged water were mixed using an agate mortar and pestle to obtain a mixture. Next, the obtained mixture was put inside a cylindrical molding die (Φ10) having an internal space. The mixture was then heated and pressurized under conditions of 50 MPa, 120 °C, and 20 minutes to obtain a test sample of this example.

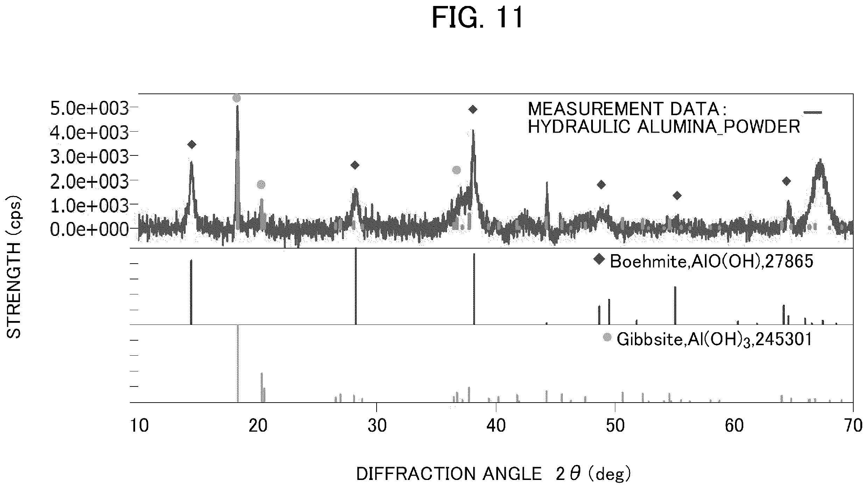

Fig. 11 illustrates the X-ray diffraction pattern of the hydraulic alumina powder and the patterns of boehmite (AlOOH) and gibbsite (Al(OH)₃) registered in the ICSD. As illustrated in Fig. 11, it is evident that the hydraulic alumina is a mixture of boehmite and gibbsite. Note that although not illustrated in Fig. 11, the hydraulic alumina also includes p-alumina.

### (X-ray diffraction measurement)

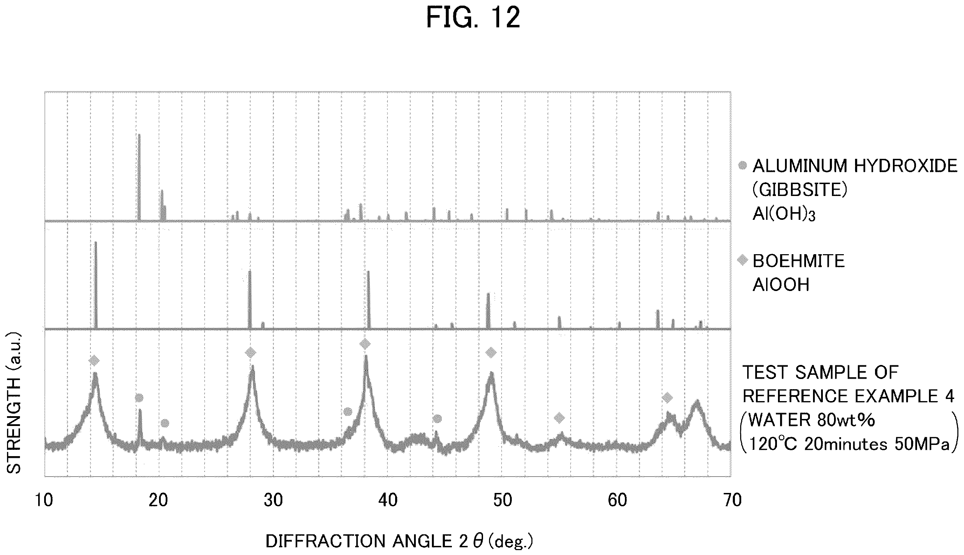

The X-ray diffraction pattern of the test sample of reference example 4 was measured using an X-ray diffraction apparatus. Fig. 12 illustrates the X-ray diffraction pattern of the test sample of reference example 4 and the X-ray diffraction patterns of boehmite and gibbsite registered in the ICSD. It is evident from Fig. 12 that the test sample of reference example 4 is a structure mainly made from boehmite. Thus, it is evident from Figs. 11 and 12 that the raw material gibbsite (aluminum hydroxide) changes to boehmite due to the pressure heating method.

Although the present embodiment has been described above, the present embodiment is not limited to these descriptions, and various modifications are possible within the scope of the gist of the present embodiment.

The entire contents of Japanese Patent Application No. 2021-205323 (filed December 17, 2021) are incorporated herein by reference.

### INDUSTRIAL APPLICABILITY

The present disclosure provides a composite member having an excellent mechanical strength.

### REFERENCE SIGNS LIST

- 10: Inorganic matrix part
- 20: Metal fiber (aluminum fiber)
- 100: Composite member

## Claims

1. A composite member, comprising:
an inorganic matrix part that is made from an inorganic substance including a metal oxide hydroxide; and
a metal fiber that is present in a dispersed state inside the inorganic matrix part and has an aspect ratio of 100 or more, wherein
a porosity in a cross section of the inorganic matrix part is 20% or less.

2. The composite member according to claim 1, wherein the metal fiber has malleability and is oriented mainly in a predetermined direction inside the inorganic matrix part.

3. The composite member according to claim 1 or 2, wherein the metal fiber is includes in an amount of 10% by volume or more.

4. The composite member according to any one of claims 1 to 3, wherein the metal oxide hydroxide and the metal fiber include a same metallic element.

5. The composite member according to any one of claims 1 to 4, wherein at least one of the metal oxide hydroxide or the metal fiber includes aluminum.

6. The composite member according to claim 5, wherein the metal oxide hydroxide is boehmite.

7. The composite member according to claim 6, wherein the inorganic matrix part and the metal fiber bond with each other via a boehmite layer that is formed on a surface of the metal fiber and is different from the inorganic matrix part.
